# EUROPÄISCHE PATENTSCHRIFT

(11) **EP 0 492 513 B1**
(45) Veröffentlichungstag und Bekanntmachung des Hinweises auf die Patenterteilung: **01.03.1995**
(21) Anmeldenummer: 91121974.9
(22) Anmeldetag: 20.12.1991
(51) Int. Cl.: B60R 9/058

(54) **Lastenträger**
Luggage carrier
Porte-bagages

(30) Priorität: 21.12.1990 DE 4041309
(43) Veröffentlichungstag der Anmeldung: 01.07.1992
(73) Patentinhaber: Tittel, Eberhard, 88287 Grünkraut (DE)
(72) Erfinder: Tittel, Eberhard, 88287 Grünkraut (DE)
(74) Vertreter: Schmidt-Evers, Jürgen, Dipl.-Ing.

(56) Entgegenhaltungen:
- DE-A- 3 405 357
- FR-A- 2 345 313
- FR-A- 2 556 667

## Beschreibung

Die Erfindung betrifft einen Lastenträger nach dem Oberbegriff des Anspruchs 1 zur Befestigung auf dem Dach eines regenrinnenlosen Automobils.

Aus der DE-A-3 625 785 ist ein derartiger Lastenträger bekannt, dessen Dachplatte der gesamten Fläche des flächig ausgebildeten unteren Endes des Stützfußes anliegt und mit diesem durch Verschraubung unbeweglich verbunden ist. In der Praxis hat sich als Nachteil herausgestellt, daß bei hohen Belastungen der Tragholm des bekannten Lastenträgers zum Durchbiegen neigt und der Stützfuß zusammen mit der Klemmplatte um die an der Dachplatte ausgebildete Stufe als einwärts in Richtung Dachmitte schwenken und dabei die Klaue der Klemmplatte aus der Verankerung mit der am Dachrand ausgebildeten Kante lösen sowie die Kontaktfläche zwischen Dachplatte und Dach verringern kann.

Es ist Aufgabe der Erfindung, den Lastenträger der eingangs genannten Art so weiterzubilden, daß Durchbiegungen des Tragholms unter der Wirkung von Belastungen verhindert werden.

Diese Aufgabe wird erfindungsgemäß durch die kennzeichnenden Merkmale des Anspruchs 1 gelöst. Durch entsprechende Längenverstellung des Verbindungselements zwecks Abstandsvergrößerung zwischen dem unteren und dem oberen Gelenk kann der Tragholm unter jeweils diejenige Vorspannung gesetzt werden, die die unter der Wirkung der äußeren Belastung im Inneren des Tragholms auftretende Spannung ausgleicht. Auf diese Weise werden Durchbiegungen sicher vermieden. Gleichzeitig schwenkt der Stützfuß während der Längenverstellung des Verstellelementes um die Gelenkverbindung nach außen und drückt dabei die Klaue der Klemmplatte nach einwärts, so daß ihre Verankerung an der am Dachrand ausgebildeten Kante verstärkt wird. Außerdem bleibt die Dachplatte infolge ihrer Anlenkung am Stützfuß bei dessen Verschwenkung in voller Anlage am Dach.

Gemaß einer Weiterbildung der Erfindung ist das untere Gelenk im Bereich des Vorsprungs angeordnet, vorzugsweise auf dessen Seite, die der den Tragholm senkrecht schneidenden Ebene abgewandt ist. Dabei kann das Verbindungselement im wesentlichen senkrecht auf der Dachplatte - und damit auf dem darunterliegenden Dachabschnitt - stehen.

Zweckmäßigerweise umfaßt die Gelenkverbindung eine eine Rinne bildende, nach oben gerichtete Abwinklung des äußeren Randbereiches der Dachplatte und das in diese Rinne eingreifende untere Ende des Stützfußes. Auf diese Weise ist es möglich, einen herkömmlichen Stützfuß eines Lastenträgers für ein Automobil mit Regenrinne für den erfindungsgemäßen Lastenträger zu verwenden.

Vorteilhafterweise ist das Verbindungselement als Spannschloßschraube ausgebildet.

Gemäß einer Weiterbildung der Erfindung ist am Stützfuß bzw. an der Klemmplatte je eine Eingriffsfläche ausgebildet, die beide mittels des Spannelementes in gegenseitigen Kraftschlußeingriff bringbar sind. Dabei ist es vorteilhaft, wenn die Eingriffsfläche am Stützfuß zumindest teilweise oberhalb einer Geraden angeordnet ist, die im wesentlichen parallel zum Tragholm durch das untere Gelenk verläuft.

Zweckmäßigerweise umfaßt das Spannelement einen am Stützfuß befestigten oder befestigbaren Bolzen für den Durchtritt durch ein sich im wesentlichen senkrecht zu der parallel zum Tragholm durch das untere Gelenk verlaufenden Geraden erstreckendes Langloch in der Klemmplatte und ein Griffteil mit einer Angriffsfläche zur Anlage an die Klemmplatte.

Vorzugsweise verläuft die Eingriffsfläche am Stützfuß schräg ansteigend in Richtung der den Tragholm senkrecht schneidenden Ebene. Entlang dieser Eingriffsfläche gleitet beim Verspannen des Spannelementes die in gleicher Richtung schrägverlaufende Eingriffsfläche der Klemmplatte,wodurch letztere nach oben einwärts gezogen und damit ihre Klaue fest gegen den am Dachrand ausgebildeten Ansatz, diesen untergreifend, gedrückt wird.

Vorteilhafterweise ist die Eingriffsfläche an der Klemmplatte unterhalb des Langloches angeordnet. Dabei kann die Klemmplatte oberhalb des Langloches eine Stützfläche zum Abstützen an einer entsprechenden Gegenfläche am Stützfuß aufweisen. Günstig ist eine Ausbildung, gemäß welcher die Gegenfläche und die Eingriffsfläche am Stützfuß im wesentlichen parallel zueinander verlaufen.

Nachstehend ist die Erfindung anhand eines bevorzugten Ausführungsbeispiels unter Bezugnahme auf die Zeichnung näher beschrieben. Es zeigen
- Figur 1:: eine perspektivische Darstellung einer Hälfte des erfindungsgemäßen Lastenträgers, und
- Figur 2:: eine Seitenansicht der in Figur 1 dargestellten Hälfte des Lastenträgers im Schnitt.

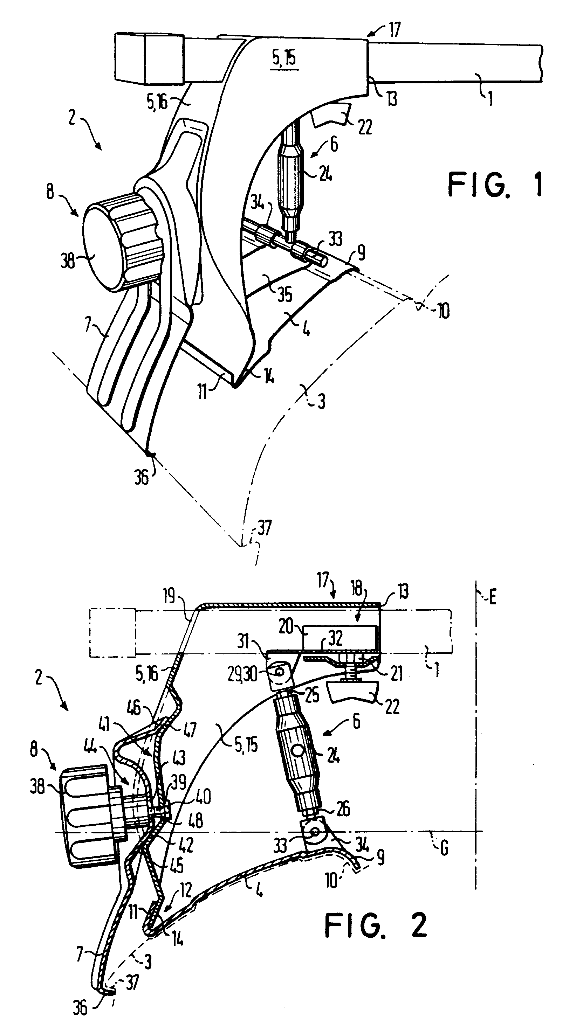

Der in der Zeichnung dargestellte Lastenträger besteht aus wenigstens einem Tragholm 1, der sich mit seinen beiden Enden über je eine Stützeinrichtung 2 an den einander gegenüberliegenden Längsrandbereichen des Daches 3 eines Automobils ohne Regenrinne, wie etwa eines VW-Busses T4, abstützt. Der Einfachheit halber ist nachstehend lediglich eine der beiden identischen Stützeinrichtungen 2 beschrieben, wobei die verwendeten Begriffe: rechts, links, oben, unten, innen und außen sich auf die Verhältnisse in den Figuren 1 und 2 beziehen.

Die Stützeinrichtung 2 umfaßt eine Dachplatte 4, einen Stützfuß 5, ein Verbindungselement 6, eine Klemmplatte 7 und ein Spannelement 8.

Die Dachplatte 4 ist zur flächigen Auflage auf dem Dach 3 vorgesehen und weist eine dementsprechende Kontur auf. Ihr rechter, der Dachmitte zugewandter Längsrand ist zur Bildung eines Vorsprungs 9 nach unten abgewinkelt und hintergreift eine im Dach 3 ausgebildete, zur Dachmitte abfallende Stufe 10. Der linke, dem Dachrand zugewandte Längsrand der Dachplatte 4 ist mit einer nach oben gerichteten Abwinkelung 11 versehen, die eine im Querschnitt V-förmige Rinne 12 bildet.

Der Stützfuß 5 ist ein herkömmlicher Stützfuß eines Lastenträgers für ein Automobil mit Regenrinne. Er weist ein oberes Ende 13 sowie ein unteres Ende 14 auf und ist von U-förmigem Querschnitt, der nach unten offen ist, und zwei Schenkel 15 sowie einen diese verbindenden Steg 16 umfaßt. Letzterer erstreckt sich im oberen Stützfußendbereich 17 parallel zum Tragholm 1 und sodann mit bogenförmigem, nach außen gewölbten Verlauf bis zum unteren Stützfußende 14, mit dem er, da die Schenkel 15 vorher bis auf den Wert Null auslaufen, in die Rinne 12 der Dachplatte 4 derart eingreift, daß beide Bauteile 12, 14 eine Gelenkverbindung bilden. Das obere Stützfußende 13 weist einen geringeren Abstand von einer den Tragholm 1 senkrecht schneidenden Ebene E als das untere Stützfußende 14 auf.

Der Stützfuß 5 umfaßt zur Befestigung des Tragholms 1 einen allseits geschlossenen Führungsabschnitt 18 im oberen Stützfußendbereich 17 sowie eine damit fluchtende Durchtrittsöffnung 19 im oberen Bereich des bogenförmig verlaufenden Teils des Stegs 16. Zur Bildung des Führungsabschnittes 18 ist zwischen den Schenkeln 15 des Stützfußes 5 ein U-förmiger, nach oben offener Einsatz 20 befestigt, dessen Steg eine Durchgangsöffnung mit Schraubgewinde (siehe Mutter 21) zur Aufnahme einer Flügelkopfschraube 22 aufweist. Letztere dient dazu, den im Schiebesitz den Führungsabschnitt 18 und die Durchtrittsöffnung 19 durchsetzenden Tragholm 1 am Stützfuß festzulegen und somit gegenüber Verschiebungen zu sichern.

Das Verbindungselement 6 ist als herkömmliche Spannschloßschraube mit einer Spannhülse 24 und einem oberen sowie einem unteren Gewindebolzen 25, bzw. 26 ausgebildet und über ein oberes und ein unteres Gelenk am Tragholm 1 bzw. an der Dachplatte 4 unmittelbar neben dem Vorsprung 9 angelenkt. Das obere Gelenk umfaßt zwei am oberen Gewindebolzen 25 der Spannschloßschraube 6 befestigte Lagerzapfen 29 und zwei diese aufnehmende Lageröffnungen 30 in zwei in Längsrichtung des Tragholms 1 verlaufenden Parallelflanschen 31 an einem Verstärkungselement 32, das an der Unterseite des Tragholms 1 befestigt ist. Das untere Gelenk umfaßt ebenfalls zwei am unteren Gewindebolzen 26 befestigte Lagerzapfen 33 und zwei diese aufnehmende Lagerbuchsen 34, die von zwei entsprechend gebogenen, in eine Dachplattenausnehmung 35 hineinragenden Zungen gebildet sind. Im montierten Zustand, d.h. wenn der Tragholm 1 im Stützfuß 5 in der vorbeschriebenen Weise befestigt ist, befindet sich das obere Gelenk 29, 30 im Bereich zwischen dem Führungsabschnitt 18 und der Durchtrittsöffnung 19. Die Spannschloßschraube 6 verläuft in Richtung Dachplatte 4 schräg nach innen, steht jedoch im wesentlichen senkrecht auf dem die Lagerbuchsen 34 aufweisenden Dachplattenabschnitt und schließt mit dem die Durchtrittsöffnung 19 durchsetzenden Abschnitt des Tragholms 1 einen stumpfen Winkel ein.

Die Klemmplatte 7 ist ein im wesentlichen flächiges Element, das mittels des Spannelementes 8 am Stützfuß 5 lösbar befestigt ist und dessen unterer Längsrand zur Bildung einer Klaue 36 nach innen umgebogen ist. Diese Klaue 7 untergreift eine am Dachrand ausgebildete Kante 37 die den oberen Türauschnitt der Karosserie des Automobils begrenzt.

Das Spannelement 8 ist von der Form einer Kopfschraube mit einem als Drehgriff 38 ausgebildeten Kopf und einem Bolzen 39, der in eine Gewindebohrung 40 im bogenförmig verlaufenden Teil des Steges 16 des Stützfußes 5 eingeschraubt ist. Wie in Figur 2 gezeigt, ist die Gewindebohrung 40 von einer Mutter gebildet, die an der Innenseite des Steges 16 koaxial zu einer in diesem ausgebildeten Durchgangsöffnung befestigt ist.

Der die Gewindebohrung 40 umgebende Bereich des Steges 16 ist nach innen zur Bildung einer Vertiefung 41 eingeprägt. Eine unterhalb der Gewindebohrung 40 angeordnete, in Richtung der Ebene E schräg ansteigende Eingriffsfläche 42 verbindet die Vertiefung 41 mit dem nicht eingeprägten Bereich des Steges 16. Die Eingriffsfläche 42 ist jeweils zur Hälfte oberhalb bzw. unterhalb einer gedachten Geraden G angeordnet, die parallel zum Tragholm 1 durch das untere Gelenk 33, 34 verläuft.

Die Klemmplatte 7 ist in ihrem oberen Bereich mit einem senkrecht zur Geraden G verlaufenden Langloch 43 für den Durchtritt des Bolzens 39 des Spannelementes 8 ausgebildet. Der das Langloch 43 umliegende Bereich der Klemmplatte 7 ist zur Bildung einer Vertiefung 44 nach innen eingeprägt. Eine unterhalb des Langloches 43 angeordnete, in Richtung der Ebene E schräg ansteigende Eingriffsfläche 45 verbindet die Vertiefung 44 mit dem nicht eingeprägten Teil der Klemmplatte 7. Der obere Endbereich der Klemmplatte 7 oberhalb der Vertiefung 44 ist nach innen abgebogen und weist eine Stützfläche 46 auf, die sich, wie Figur 2 deutlich zeigt, an einer Gegenfläche 47 abstützt, welche sich oberhalb der Gewindebohrung 40 an die Vertiefung 41 anschließt. Diese Gegenfläche verläuft im wesentlichen parallel zur Eingriffsfläche 42 am Stützfuß 5.

Die dem Bolzen 39 zugewandte Stirnfläche 48 des Drehgriffs 38 ist als Angriffsfläche zur Anlage an den das Langloch 43 umgebenden Bereich der Vertiefung 44 ausgebildet und hält beide Eingriffsflächen 42, 45, die etwa parallel zueinander verlaufen und in der DE-C-3 243 878 beschrieben sind, im gegenseitigen Kraftschlußeingriff. Gleichzeitig stützt sich die Stützfläche 46 an der Gegenfläche 47 ab. Wenn beide Eingriffsflächen 42,45 in der in Figur 2 gezeigten Stellung relativ zueinander angeordnet sind und die Klaue 36 noch nicht an der Kante 37 verankert ist, rutscht mit zunehmendem Einschrauben des Spannelementes 8 die Eingriffsfläche 45 und damit die Klemmplatte 7 entlang der Eingriffsfläche 42 des Stützfußes 5 soweit schräg nach oben, bis die Klaue 36 die Dachrandkante 37 untergreift und dort fest verankert wird.

Zur Vermeidung von Durchbiegungen des Tragholms 1 unter der Wirkung einer Last wird durch entsprechende Verstellung der Spannschloßschraube 6 zwecks Vergrößerung des Abstandes zwischen dem unteren Gelenk 33, 34 und dem oberen Gelenk 29,30 der Tragholm 1 unter diejenige Vorspannung gesetzt, die die unter der Wirkung der Last im Inneren des Tragholms 1 auftretende Spannung ausgleicht.Gleichzeitig wird der Stützfuß 5 zusammen mit der an ihm befestigten Klemmplatte 7 um die Gelenkverbindung 12, 14 verschwenkt, wobei die Klaue 36 der Klemmplatte 7 nach innen gedrückt und damit ihre Verankerung an der am Dachrand ausgebildeteten Kante 37 verstärkt wird. Auf diese Weise ist sichergestellt, daß der erfindungsgemäße Lastenträger auch bei hohen Belastungen voll funktionsfähig bleibt, d.h. seine Verankerung über die Klemmplatte 7 am Dach 3 sich nicht lösen kann und keine Durchbiegungen des Tragholms 1 auftreten.

## Patentansprüche

1. Lastenträger zur Befestigung auf dem Dach (3) eines regenrinnenlosen Automobils, mit wenigstens einem Tragholm (1), mit je einem mit seinem oberen Ende an den Endbereichen des Tragholms (1) befestigten Stützfuß (5), dessen unteres Ende (14) einen größeren Abstand als sein oberes Ende (13) von einer den Tragholm (1) senkrecht schneidenden Ebene (E) aufweist und mit einer zur Abstützung auf dem Dach vorgesehenen Dachplatte (4) verbunden ist, die einen nach unten gerichteten Vorsprung (9) zum Hintergreifen einer im Dach (3) ausgebildeten, zu dessen Dachmitte abfallenden Stufe aufweist, und mit einer Klemmplatte (7), deren oberer Bereich zur Anlage an die der Ebene abgewandten Außenseite des Stützfußes vorgesehen und mit diesem mittels eines Spannelementes (8) lösbar verspannt ist und deren unteres Ende eine nach einwärts gerichtete Klaue zur Verankerung an einer am Dachrand ausgebildeten Kante durch Untergreifen derselben aufweist,
**gekennzeichnet durch**
eine Gelenkverbindung (12,14) zwischen dem unteren Ende (14) des Stützfußes (5) und dem äußeren, der den Tragholm (1) senkrecht schneidenden Ebene (E) abgewandten Randbereich der Dachplatte (4) und durch ein Verbindungselement (6), das über ein oberes Gelenk (29,30) mit dem Tragholm (1) oder dem oberen Stützfuß-Endbereich (17) und ein unteres Gelenk (33,34) mit der Dachplatte (4) verbunden und zwecks Abstandsveränderung zwischen diesen Gelenken (29,30;33,34) längenverstellbar ist.

2. Lastenträger nach Anspruch 1,
**dadurch gekennzeichnet, daß**
das untere Gelenk (33,34) im Bereich des Vorsprungs (9) der Dachplatte (4) angeordnet ist.

3. Lastenträger nach Anspruch 2,
**dadurch gekennzeichnet, daß**
das untere Gelenk (33,34) im Bereich des Vorsprungs (9) auf dessen der Ebene (E) abgewandten Seite angeordnet ist.

4. Lastenträger nach wenigstens einem der vorhergehenden Ansprüche,
**dadurch gekennzeichnet, daß**
das Verbindungselement (6) im wesentlichen senkrecht auf der Dachplatte (4) steht.

5. Lastenträger nach wenigstens einem der vorhergehenden Ansprüche,
**dadurch gekennzeichnet, daß**
die Gelenkverbindung (12,14) eine eine Rinne (12) bildende, nach oben gerichtete Abwinklung (11) des äußeren Randbereichs der Dachplatte (4) und das in diese Rinne (12) eingreifende untere Stützfußende (14) umfaßt.

6. Lastenträger nach Anspruch 5,
**dadurch gekennzeichnet, daß**
der Stützfuß (5) ein für einen Lastenträger für ein Automobil mit Regenrinne verwendeter Stützfuß ist.

7. Lastenträger nach wenigstens einem der vorhergehenden Ansprüche,
**dadurch gekennzeichnet, daß**
das Verbindungselement als Spannschloßschraube (6) ausgebildet ist.

8. Lastenträger nach wenigstens einem der vorhergehenden Ansprüche,
**gekennzeichnet durch**
je eine am Stützfuß (5) bzw. an der Klemmplatte (7) ausgebildete Eingriffsfläche (42 bzw. 45), die beide mittels des Spannelementes (8) in gegenseitigen Kraftschlußeingriff bringbar sind.

9. Lastenträger nach Anspruch 8,
**dadurch gekennzeichnet, daß**
die Eingriffsfläche (42) am Stützfuß (5) zumindest teilweise oberhalb einer gedachten Geraden (G) angeordnet ist, die im wesentlichen parallel zum Tragholm (1) durch das untere Gelenk (33,34) verläuft.

10. Lastenträger nach Anspruch 9,
**dadurch gekennzeichnet, daß**
das Spannelement (8) einen am Stützfuß (5) befestigten oder befestigbaren Bolzen (39) für den Durchtritt durch ein sich im wesentlichen senkrecht zur Geraden (G) erstreckendes Langloch (43) der Klemmplatte (7) und ein Griffteil (38) mit einer Angriffsfläche (48) zur Anlage an die Klemmplatte (7) umfaßt.

11. Lastenträger nach wenigstens einem der Ansprüche 8 bis 10,
**dadurch gekennzeichnet, daß**
die Eingriffsfläche (42) am Stützfuß (5) in Richtung der den Tragholm (1) senkrecht schneidenden Ebene (E) schräg ansteigend verläuft.

12. Lastenträger nach Anspruch 10 oder 11,
**dadurch gekennzeichnet, daß**
die Eingriffsfläche (45) an der Klemmplatte (7) unterhalb des Langloches (43) angeordnet ist.

13. Lastenträger nach wenigstens einem der Ansprüche 10 bis 12,
**dadurch gekennzeichnet, daß**
die Klemmplatte (7) oberhalb des Langloches (43) eine Stützfläche (46) zum Abstützen an einer entsprechenden Gegenfläche (47) am Stützfuß (5) aufweist.

14. Lastenträger nach Anspruch 13,
**dadurch gekennzeichnet, daß**
die Gegenfläche (47) und die Eingriffsfläche (42) am Stützfuß (5) im wesentlichen parallel zueinanderverlaufen.

## Claims

1. A load carrier for attachment to the roof (3) of an automobile having no rain channel, having at least one carrier strut (1) with respective support legs (5) attached, each with its upper end, to the end regions of the carrier strut (1), the lower end (14) of the support leg having a larger spacing than the upper end (13) of the support leg from a plane (E) vertically cutting the carrier strut (1) and the lower end of the carrier strut being connected to a roof plate (4) for providing support on the roof, which roof plate has a downwardly directed projection (9) for engaging behind a step formed in the roof (3) which step falls towards the middle of the roof, and having a clamping plate (7) the upper region of which is provided for abutment against the outward side of the support leg facing away from the plane and which is releasably braced with the support leg by means of a tensioning element (8) and the lower end of which clamping plate has an inwardly directed claw for anchoring on an edge formed on the roof rim by engaging beneath the edge,
characterised by
a hinge connection (12,14) between the lower end (14) of the support leg (5) and the outer edge region, facing away from the plane (E) vertically cutting the carrier strut (1), of the roof plate (4),
and by
a connection element (6) which is connected with the carrier strut (1) or with the upper end region (17) of the support leg by way of an upper joint (29,30) and is connected with the roof plate (4) by way of a lower joint (33,34) and, for the purpose of varying the distance between these joints (29,30;33,34), is adjustable in length.

2. A load carrier according to claim 1,
characterised in that,
the lower joint (33,34) is arranged in the region of the projection (9) of the roof plate (4).

3. A load carrier according to claim 2,
characterised in that,
the lower joint (33,34) is arranged in the region of the projection (9) on the side thereof facing away from said plane (E).

4. A load carrier according to at least one of the preceding claims,
characterised in that,
the connection element (6) stands substantially vertically on the roof plate (4).

5. A load carrier according to at least one of the preceding claims,
characterised in that,
the hinged connection (12,14) comprises an upwardly directed bend (11) of the outer edge region of the roof plate (4), forming a channel (12), and the lower support leg end (14) which engages into this channel (12).

6. A load carrier according to claim 5,
characterised in that,
the support leg (5) is a support leg as used for a load carrier for an automobile with a rain channel.

7. A load carrier according to at least one of the preceding claims,
characterised in that,
the connecting element is formed as a stay tightener bolt (6).

8. A load carrier according to at least one of the preceding claims,
characterised by
respective engagement surfaces (42 and 45) formed on the support leg (5) and on the clamping plate (7), the two of which can be brought into mutual tensioned engagement by means of the tensioning element (8).

9. A load carrier according to claim 8,
characterised in that,
the engagement surface (42) on the support leg (5) is arranged at least partly above an imaginary line (G) which runs substantially parallel to the carrier strut (1) through the lower joint (33,34).

10. A load carrier according to claim 9,
characterised in that,
the tensioning element (8) comprises a bolt (39), fastened or fastenable on the support leg (5), for penetrating an oblong hole (43), extending substantially perpendicularly of the line (G), of the clamping plate (7), and a grip part (38) with an engagement surface (48) for abutment against the clamping plate (7).

11. A load carrier according to at least one of claims 8 to 10,
characterised in that,
the engagement surface (42) on the support leg (5) extends obliquely upwardly towards the plane (E) vertically cutting the carrier strut (1).

12. A roof carrier according to claim 10 or 11,
characterised in that,
the engagement surface (45) on the clamping plate (7) is arranged below the oblong hole (43).

13. A load carrier according to at least one of claims 10 to 12,
characterised in that,
above the oblong hole (43), the clamping plate (7) has a support surface (46) for bracing against a corresponding opposing surface (47) on the support leg (5).

14. A load carrier according to claim 13,
characterised in that,
the opposing surface (47) and the engagement surface (42) on the support leg (5) run substantially in parallel with one another.

## Revendications

1. Porte-charges destiné à être fixé sur le toit (3) d'une automobile ne comportant pas de gouttière, avec au moins une barre porte-charges (1), avec dans chaque partie d'extrémité de la barre porte-charges (1) un pied-support (5) qui est fixé par son extrémité supérieure sur ladite barre porte-charges et dont l'extrémité inférieure (11) est située à une distance plus grande que l'extrémité supérieure (13) par rapport à un plan (E) coupant perpendiculairement la barre porte-charges (1) et est liée à une plaque de toit (4) prévue pour prendre appui sur le toit, laquelle plaque de toit comporte une partie en saillie (9) orientée vers le bas qui est destinée à s'engager derrière un décrochement aménagé dans le toit (3) et incliné en direction du milieu du toit, et avec une plaque de serrage (7) dont la partie supérieure est prévue pour venir en appui sur la face extérieure du pied-support éloignée du plan et est serrée de manière démontable sur ledit pied support à l'aide d'un élément de serrage (8) et dont l'extrémité inférieure présente une griffe tournée vers l'intérieur qui, à des fins de fixation sur une arête du bord du toit, s'engage sous ladite arête,
caractérisé par
une liaison articulée (12, 14) entre l'extrémité inférieure (14) du pied - support (5) et la partie de bord extérieure de la plaque de toit (4) éloignée du plan (E) coupant perpendiculairement la barre porte-charges (1) et par un élément de liaison (6) qui, par l'intermédiaire d'une articulation (29, 30) supérieure est né à la barre porte-charges (1) ou à la partie d'extrémité (17) supérieure du pied-support, par l'intermédiaire d'une articulation inférieure (33, 34) est né à la plaque de toit (4) et, aux fins de faire varier la distance entre lesdites articulations (29, 30; 33, 34), est réglable en longueur.

2. Porte-charges selon la revendication 1, caractérisé par le fait que l'articulation inférieure (33, 34) est disposée dans la région de la partie en saillie (9) de la plaque de toit (4).

3. Porte-charges selon la revendication 2, caractérisé par le fait que l'articulation inférieure (33, 34) est disposée dans la région de la partie en saillie (9) du côté de celle-ci éloigné du plan (E).

4. Porte-charges selon au moins une des revendications précédentes, caractérisé par le fait que l'élément de liaison (6) est sensiblement perpendiculaire par rapport à la plaque de toit (4).

5. Porte-charges selon au moins une des revendications pré cédentes, caractérisé par le fait que la liaison articulée (12, 14) comprend un bord (11) de la partie de bord extérieure de la plaque de toit (4) qui est replié vers le haut en formant une gouttière (12) et l'extrémité (14) du pied-support qui pénètre dans ladite gouttière (12).

6. Porte-charges selon la revendication 5, caractérisé par le fait que le pied-support (5) est un pied-support utilisé en liaison avec un porte-charges pour automobile comportant une gouttière.

7. Porte-charges selon au moins une des revendications précédentes, caractérisé par le fait que l'élément de liaison est agencé sous forme de tendeur à vis (6).

8. Porte-charges selon au moins une des revendications précédentes, caractérisé par des surfaces actives (42 et 45) agencées respectivement sur le pied-support (5) et sur la plaque de serrage (7) qui par l'intermédiaire de l'élément de serrage (8) peuvent être amenés en prise mutuelle.

9. Porte-charges selon la revendication 8, caractérisé par le fait que la surface active (42) sur le pied-support (5) est disposée au moins partiellement au-dessus d'une droite (G) imaginaire sensiblement parallèle à la barre porte-charges (1), qui passe par l'articulation (33, 34) inférieure.

10. Porte-charges selon la revendication 9, caractérisé par le fait que l'élément de serrage (8) comprend une vis (39) qui est ou peut être fixée sur le pied-support (5) pour pénétrer dans un trou oblong (43) de la plaque de serrage (7) sensiblement perpendiculaire à la droite (G) et une partie formant poignée (38) pourvue d'une surface active (48) qui vient en appui sur la plaque de serrage (7).

11. Porte-charges selon au moins une des revendications 8 à 10, caractérisé par le fait que la surface active (42) sur le pied-support (5) est inclinée vers le haut en direction du plan (E) qui coupe à angle droit la barre porte-charges (1).

12. Porte-charges selon la revendication 10 ou 11, caractérisé par le fait que la surface active (45) sur la plaque de serrage (7) est disposé au-dessous du trou oblong (43).

13. Porte-charges selon au moins une des revendications 10 à 12, caractérisé par le fait que la plaque de serrage (7) présente au-dessus du trou oblong (43) une surface d'appui (46) pour l'appui sur une contre-surface (47) correspondante du pied-support (5).

14. Porte-charges selon la revendication 13, caractérisé par le fait que la contre-surface (47) et la surface active (42) sur le pied-support (5) sont sensiblement parallèles l'une à l'autre.
